# EUROPÄISCHE PATENTSCHRIFT

(11) **EP 2 753 490 B1**
(45) Veröffentlichungstag und Bekanntmachung des Hinweises auf die Patenterteilung: **11.12.2019**
(21) Anmeldenummer: 12766376.3
(22) Anmeldetag: 29.08.2012
(51) Int. Cl.: B60L 53/12, B60L 53/20, B60L 53/30, B60L 53/36, B60L 53/38, G08C 17/04, H02J 5/00, G07F 15/00, H02J 7/02

(54) **VORRICHTUNG UND VERFAHREN ZUM DRAHTLOSEN ÜBERTRAGEN VON ELEKTRISCHER ENERGIE AUF FAHRZEUGE IN DER ART "MOBILER ZAPFSÄULEN"**
APPARATUS AND METHOD FOR WIRELESSLY TRANSMITTING ELECTRICAL POWER TO VEHICLES IN THE STYLE OF "MOBILE FILLING PUMPS"
PROCÉDÉ ET DISPOSITIF DE TRANSFERT SANS FIL D'ÉNERGIE ÉLECTRIQUE VERS DES VÉHICULES SELON UN MODE "COLONNES DE DISTRIBUTION MOBILES"

(30) Priorität: 05.09.2011 DE 102011112610
(43) Veröffentlichungstag der Anmeldung: 16.07.2014
(73) Patentinhaber: Grenzebach Maschinenbau GmbH, 86663 Asbach-Baeumenheim (DE)
(72) Erfinder: LINNHOFF, Winhold, 14476 Potsdam (DE)
(74) Vertreter: Kindermann, Peter
(86) Internationale Anmeldenummer: PCT/DE2012/000872
(87) Internationale Veröffentlichungsnummer: WO 2013/034127

(56) Entgegenhaltungen:
- WO-A1-94/09544
- DE-A1-102009 023 409
- DE-U1-202011 105 359
- US-A- 5 306 999

## Beschreibung

Die Erfindung betrifft eine Vorrichtung und ein Verfahren zum drahtlosen Übertragen elektrischer Energie auf ein Fahrzeug, insbesondere ein Kraftfahrzeug, wobei die Vorrichtung selbst drahtlos mit elektrischer Energie versorgt werden kann.

Aus der DE 10 2009 023 409 A1 ist ein System zur elektrischen Energieübertragung zwischen einem außerhalb eines Fahrzeugs befindlichen primären Andockmodul und einer an dem Fahrzeug angebrachten Sekundärtrafoeinheit bekannt. Dieses System geht von einem Stand der Technik aus, wie er in der WO 94/10004 A1 beschrieben ist. In diesem Dokument sind ein Verfahren und eine Anordnung zum automatischen berührungslosen Laden der Batterie eines Elektrofahrzeugs offenbart. Mittels eines induktiven Übertragers, dessen Primärelement stationär und dessen Sekundärelement am Fahrzeug angebracht ist, wird das Sekundärelement, spätestens nachdem das Fahrzeug in eine Näherungsposition zur Ruheposition des Primärelements gebracht worden ist, frei zugänglich gemacht und es wird vorgesehen, dass das Primärelement innerhalb eines vorgegebenen Raumbereichs in allen drei Raumkoordinaten motorisch bewegbar ist. Bei diesem Verfahren werden das Primärelement und das Sekundärelement sensorgesteuert in eine vorgegebene Position zueinander gebracht und anschließend wird elektrische Energie mittels des induktiven Übertragers im Mittelfrequenzbereich übertragen.

Als nachteilig wird an diesem System die Anordnung des Primärelements und des Sekundärelements an der Unterseite des Fahrzeugs empfunden. Hier wird ausgeführt, dass es immer aufwändig ist an der Unterseite eines Fahrzeugs Bauteile zu montieren, da hierzu Hebebühnen oder Montageschächte eingesetzt werden müssen. Als nachteilig wird auch die komplizierte dreidimensionale Motorsteuerung des Primärelements zur Positionierung an das Sekundärelement des Fahrzeugs beschrieben. Es wird hierbei die Gefahr gesehen, dass das Fahrzeug beim Rangieren die zur Energieübertragung erforderliche Position verfehlt oder das Primärelement durch Überfahren zerstört. Eine Vertiefung für das Primärelement zu bauen, wie in der WO 94/10004 A1 gezeigt, wird als aufwändig und teuer angesehen. Durch extreme Witterungsverhältnisse wird die Gefahr der Beschädigung für die im Boden versenkte Primäreinheit durch Verunreinigung, vorzeitige Korrosion oder Vereisung gesehen. Eine Überdachung oder Abdeckung der Primäreinheit wäre aufwändig und teuer und könnte die Übertragung der elektrischen Energie behindern.

Deshalb liegt dem aus der DE 10 2009 023 409 A1 bekannten System die Aufgabe zugrunde, ein kostengünstiges, robustes, elektrisches Energieübertragungssystem für Fahrzeuge zu schaffen, das die oben genannten Nachteile vermeidet, dessen Komponenten einfach zu montieren sind und einfacher zu erreichen sind als bei dem beschriebenen Stand der Technik.

Zur Lösung dieser Aufgabe wird deshalb in diesem Dokument vorgeschlagen, dass sich die Sekundärtrafoeinheit am Bug oder am Heck des Fahrzeugs befindet. Weiter wird vorgeschlagen, dass ein Andockmodul einen vorgelagerten Öffnungsstift aufweist (Patentanspruch 2) und dass die Sekundärtrafoeinheit durch ein Schutzgehäuse geschützt ist und dass das Schützgehäuse eine gefederte Schutzkappe aufweist (Patentanspruch 4).

In der EP 0788 212 B1 ist ein Verbindungssystem zum Laden einer Batterie oder Antriebsbatterie eines elektrisch betriebenen Fahrzeugs bzw. Elektrofahrzeugs, welches zum Antreiben bzw. Fahren des Fahrzeugs verwendet wird, beschrieben. Mit diesem bekannten System soll ein leichter Ladevorgang eines elektrisch betriebenen Fahrzeugs ermöglicht werden.

Das System umfasst eine Primärspule, welche mit einer externen Leistungsquelle verbunden ist, eine Sekundärspule, welche mit einer Batterie oder einer Last verbunden ist, und eine Fahrzeugtyp - Unterscheidungsvorrichtung zum Unterscheiden bzw. Feststellen eines Typs des Fahrzeugs welches geparkt ist. Hierbei kann die Primärspule elektromagnetisch mit der Sekundärspule zum Induzieren eines Stroms in der Sekundärspule gekoppelt werden.

Ausgehend von diesem Stand der Technik soll in diesem Dokument unter Schutz gestellt werden, dass das Verbindungssystem weiterhin die folgenden Merkmale umfasst:
1) wenigstens eine Radführung, welche so vorgesehen ist, dass ein vorbestimmter Positionszusammenhang relativ zu der Primärspule existiert, wobei eines oder mehrere Räder des Fahrzeugs durch die Radführung zu einer elektromagnetischen Verbindungs- und Kopplungsposition führbar sind, und wo die Sekundärspule des Fahrzeugs im Wesentlichen elektromagnetisch mit der Primärspule verbunden ist, und eine
2) Positionseinstellvorrichtung zum Unterscheiden oder Einstellen von Relativpositionen der Radführung und der Primärspule, worin die Sekundärspule des Fahrzeugs und die Primärspule zu der elektromagnetischen Verbindungsposition durch Antreiben der Positionseinstellvorrichtung in Übereinstimmung mit der durch die Fahrzeugtyp - Unterscheidungsvorrichtung festgestellten Fahrzeugtype geführt wird.

Dieses Verbindungssystem ist fest installiert und setzt somit voraus, dass das betreffende Fahrzeug zum Laden der Batterie an einen bestimmten Platz gefahren werden muss.

Aus der Druckschrift US 5 306 999 A ist eine Vorrichtung zum drahtlosen induktiven Übertragen elektrischer Energie auf ein Fahrzeug bekannt, wobei eine Basiseinheit einen manuell bedienbaren Schwenkarm aufweist, der über einen Handgriff zu einem Sekundärteil am Fahrzeug geführt wird.

Der erfindungsgemäßen Vorrichtung bzw. dem entsprechenden Verfahren liegt die Aufgabe zugrunde, eine Vorrichtung und ein Verfahren vorzustellen mit dem unter praxisnahen Bedingungen auch auf größeren publikumswirksamen Flächen eine Übertragung von elektrischer Energie auf Elektrofahrzeuge möglichst bequem und sicher automatisiert erfolgen kann, wobei auch die Bezahlung unter Benutzung gängiger Zahlungsmittel problemlos getätigt werden kann und eine leichte Installation einer entsprechenden "elektrischen Tankstelle" möglich ist.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 8 gelöst.

In den Unteransprüchen sind weitere vorteilhafte Ausgestaltungen der Erfindung gekennzeichnet.

Der wesentliche Vorteil der Erfindung besteht darin, dass sie es ermöglicht eine notwendige Infrastruktur zur Versorgung von Fahrzeugen mit elektrischer Energie in der einfachsten Ausbaustufe schnell und kostengünstig aufzubauen und rasch an veränderte Bedürfnisse anzupassen.

Zudem wird es bei einem dichten Netz erfindungsgemäßer Stationen den Haltern von solchen Fahrzeugen ermöglicht und sinnvoll erscheinen auch kleinere Energiedefizite schnell zu ergänzen um immer einen möglichst großen Aktionsradius zu haben. So kann ein solcher Fahrzeughalter während eines Einkaufs oder einer Partie Golf relativ schnell seine Fahrzeugbatterie aufladen. Eine entsprechende Nachricht über sein Handy wird ihn über einen erfolgten Ladevorgang informieren. Der Nachteil eines elektrisch betriebenen Fahrzeugs bezüglich der wegen der noch unzureichenden Batteriekapazität geringen Reichweite wird durch die Erfindung im Bereich größerer Städte relativiert.

Auch im ländlichen Bereich könnte sich jedoch eine neue Infrastruktur solcher "elektrischer Tankstellen" über private Investoren heranbilden.

Denn die Installation einer normalen Tankstelle erfordert weit höhere Kosten und Aufwand hinsichtlich der Erfüllung behördlicher Auflagen.

Die erfindungsgemäße Vorrichtung wird im Folgenden näher beschrieben. Es zeigen dabei im Einzelnen:
Fig.1: einen Querschnitt der erfindungsgemäßen Vorrichtung
Fig.2 eine vordere Ansicht der Mobilstation

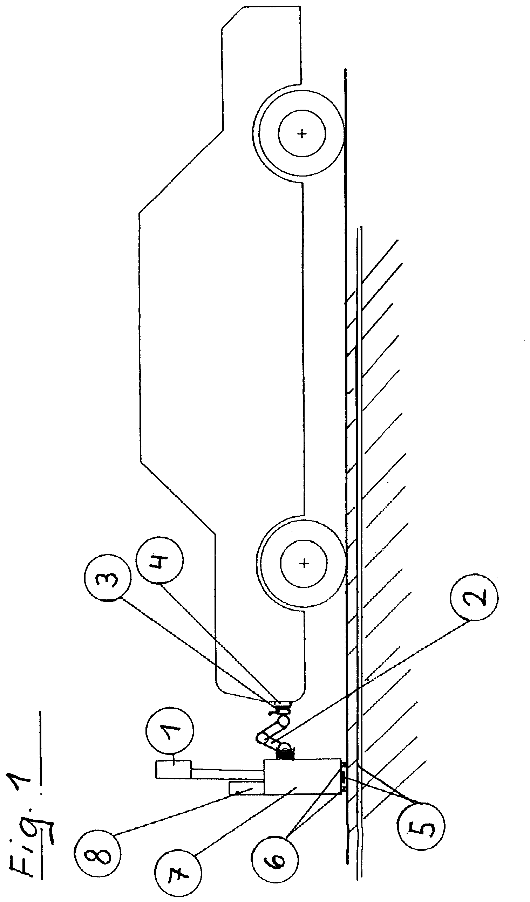

In der Fig.1 ist im Querschnitt ein mit elektrischer Energie zu versorgendes Fahrzeug, hier ein normaler Personenkraftwagen, vor einer mobilen Ladestation 7 gezeigt. Diese mobile Ladestation, oder kurz Mobilstation 7, verfügt über eine Fahreinrichtung 6, die sie befähigt sich auf dem für sie vorgesehenen Platz oder auch auf größeren Flächen frei zu bewegen oder bewegt zu werden.

Bei einem solchen Platz kann es sich zum Beispiel um eine Garage, eine große Tiefgarage, einen Parkplatz vor einem Einkaufs - Center oder einen Parkplatz vor einem Golfclub handeln.

Die elektrische Energieversorgung für die Mobilstation 7 selbst und für den eigentlichen Vorgang der elektrischen Energieübertragung auf ein Fahrzeug kann über eine weitere zusätzliche induktive Energieübertragung 5 mittels im Boden verlegter Kabel erfolgen.

Die Mobilstation 7 verfügt über einen Roboterarm 2 der an seinem Vorderteil zur Energieübertragung ein Primärteil 3 eines Ladeübertragers trägt. Das zugehörige Sekundärteil 4 des Ladeübertragers befindet sich am Fahrzeug.

Die Übertragung der zum Aufladen der Fahrzeugbatterie des jeweiligen Fahrzeugs benötigten elektrischen Energie erfolgt induktiv über den zwischen dem Primärteil 3 und dem Sekundärteil 4 bestehenden Luftspalt. Der Roboterarm 2 der Mobilstation 7 ist hierbei in der Lage, das Primärteil 3 in eine optimale Position an das Sekundärteil 4 heranzuführen.

In Augenhöhe eines, im zu beladenden Fahrzeug sitzenden, Fahrers ist auf der Mobilstation 7 ein Kommunikations - Modul 1 angebracht.

Die Bezahleinheit 8 komplettiert die Grundausrüstung der Mobilstation 7. Im einfachsten Fall kann hier, wie bei anderen Automaten auch, mit Bargeld bezahlt werden.

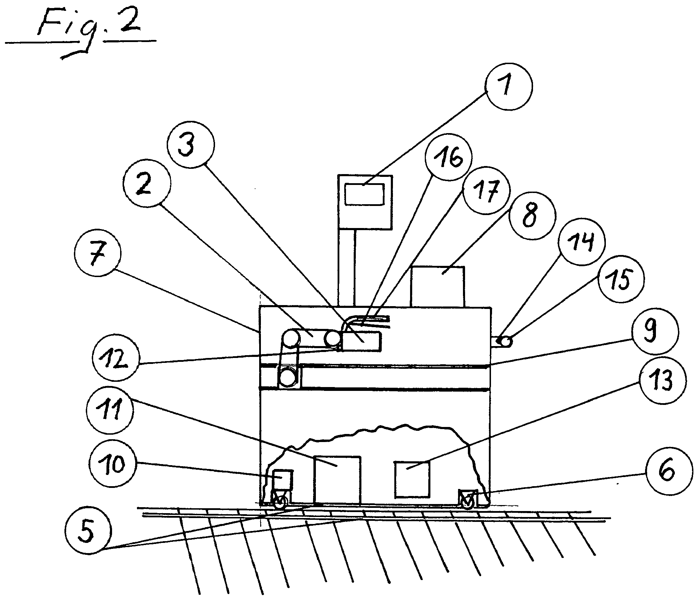

In der Fig.2 ist eine vordere Ansicht der Mobilstation 7 gezeigt.

Hier sind in der Draufsicht wieder die induktive Energieübertragung 5 und die Fahreinrichtung 6 der Mobilstation 7 zu erkennen.

Die Horizontalverfahr - Einrichtung 9 an der Mobilstation 7 ermöglicht dem Roboterarm 2 eine Horizontal - Justierung des Primärteils 3 des Ladeübertragers an das am Fahrzeug angebrachte Sekundärteil 4 des Ladeübertragers ohne die Mobilstation extra zu verfahren. Diese Einrichtung 9 ist dabei behilflich eventuell notwendige Lagekorrekturen des Roboterarms 2 auszuführen ohne die gesamte Mobilstation 7 zu verfahren wenn diese zum Beispiel optimal zu der Lage eines im Boden liegenden Kabels positioniert ist. Diese Einrichtung kann auch von Nutzen sein wenn das betreffende Fahrzeug sich aus irgend einem Grund unvorhergesehen bewegt und eine Nachjustierung des Roboterarms 2 notwendig macht.

In dieser Fig.2 ist auch in dem aufgeschnittenen Teil der Mobilstation 7 der Antrieb 10 der Fahreinrichtung 6 zu erkennen. Die Betriebs - Batterie 11 der Mobilstation 7 ist in diesem Bereich ebenso angeordnet wie die, für die gesamte Steuerung der im Zusammenhang mit der Mobilstation getätigten Vorgänge notwendige, Steuereinheit 13.

In dieser Ansicht ist auch ein Sensor 12 zu sehen, der den Roboterarm 2 mit dem Primärteil 3 des Ladeübertragers in die genaue Lage zu dem Sekundärteil 4 führt. Für eine sichere Funktion der Steuerung des Roboterarms 2 mittels des Sensors 12 ist es erforderlich, dass das Sekundärteil 4 die Funktion einer dreidimensionalen Lagemeldung erbringt die mit den korrespondierenden Erfassungselementen des Sensors 12 harmoniert. Deshalb ist es erforderlich, dass vor Beginn eines Ladevorgangs entsprechende elektronische Anlageteile in der Mobilstation 7 und im Fahrzeug sich darüber austauschen, ob und auf welche Weise ein Ladevorgang möglich ist. Denn jede Fahrzeugbatterie erfordert einen anderen Ladestrom und einen besonderen Ladezyklus.

Im Rahmen eines solchen Überprüfungsvorgangs auf elektronischer Ebene werden automatisch auch die Randbedingungen der induktiven Energieübertragung zwischen dem Primärteil 3 und dem Sekundärteil 4 des Ladeübertragers überprüft, sodass vor dem eigentlichen Ladevorgang die Bedingungen für eine sichere Energieübertragung gewährleistet sind. Eventuelle Einflüsse der Umwelt die eine Behinderung der Energieübertragung durch Schmutz oder dergleichen hervorrufen könnten, können auf diese Weise zum Beispiel durch eine neue, veränderte Positionierung des Roboterarms 2 berücksichtigt und korrigiert werden.

Die Entriegelung 14 der Fahreinrichtung 6 ermöglicht die manuelle Positionierung des Mobilteils 7 mittels des beispielhaft dargestellten Handgriffs 15.

Auch der Roboterarm 2 kann mittels der Entriegelung 16 von der automatischen Steuerung abgekoppelt werden, um im Bedarfsfall das Primärteil 3 des Ladeübertragers per Hand mittels des Handgriffs 17 zu dem Sekundärteil 4 am Fahrzeug zu führen. Diese Maßnahmen betreffen in der Hauptsache eine niedrige Ausbaustufe in der die Mobilstation 7 entweder mittels einer direkt zugeführten elektrischen Leitung oder mittels einer vorher auf Vorrat aufgeladenen starken Lade - Batterie mit elektrischer Energie versorgt wird.

Bei dem Ausfall der Fahreinrichtung 6 der Mobilstation 7 kann die Möglichkeit einer zusätzlich an die Mobilstation andockbaren Verfahrmöglichkeit vorgesehen sein, die zum Beispiel von einem normalen Verbrennungsmotor angetrieben wird. Eine solche gewissermaßen behelfsmäßige Möglichkeit der Verfahrbarkeit der Mobilstation kann zum Beispiel zur Erprobung in einer vorgezogenen Ausbaustufe des erfindungsgemäßen Ladesystems vorgesehen sein.

Die Fahreinrichtung 6 der Mobilstation 7 kann im Normalfall, ähnlich wie die Steuerung von Modellautos, mit einer funktechnisch zu betätigenden Fernsteuerung betätigt werden.

Die Steuerung der komplexen Bewegungsvorgänge und die Signalverarbeitung der verwendeten Sensoren erfordern ein spezielles Steuerungsprogramm der Anlage.

### Bezugszeichenliste

- 1: Kommunikations - Modul
- 2: Roboterarm
- 3: Primärteil des Ladeübertragers
- 4: Sekundärteil des Ladeübertragers
- 5: Induktive Energieübertragung auf die Mobilstation
- 6: Fahreinrichtung der Mobilstation
- 7: Mobilstation
- 8: Bezahleinheit
- 9: Horizontalverfahr - Einrichtung des Roboterarms
- 10: Antrieb der Fahreinrichtung 6
- 11: Betriebs - Batterie der Mobilstation 7
- 12: Sensor des Roboterarms 2
- 13: Steuereinheit
- 14: Entriegelung der Fahreinrichtung 6
- 15: Handgriff für manuelle Positionierung
- 16: Entriegelung des Roboterarms
- 17: Handgriff zur manuellen Positionierung des Roboterarms (bzw. des Primärteils 3 der Energieübertragungseinheit)

## Patentansprüche

1. Vorrichtung zum drahtlosen induktiven Übertragen elektrischer Energie auf ein Fahrzeug,
mit den folgenden Merkmalen:
a) einer mittels einer Fahreinrichtung (6) verfahrbaren Mobilstation (7) mit einem automatisch gesteuerten Roboterarm (2) und einem daran positionierten Primärteil (3) eines Ladeübertragers, wobei die (14) der automatischen Steuerung des Roboterarms (2) mittels einer Vorrichtung (16) und/oder der Fahreinrichtung (6) mittels einer Einrichtung (14) möglich ist, wobei die Entriegelung (14) die manuelle Positionierung der Mobilstation (7) mittels eines Handgriffs (15) ermöglicht und die Entriegelung (16) ermöglicht, dass der Roboterarm (2) von seiner automatischen Steuerung abgekoppelt wird, um im Bedarfsfall das Primärteil (3) des Ladeübertragers per Hand mittels eines Handgriffs (17) zu einem Sekundärteil (4) am Fahrzeug zu führen, wobei beim Ausfall der Fahreinrichtung (6) der Mobilstation (7) zusätzlich eine an die Mobilstation (7) andockbare Verfahrmöglichkeit vorgesehen ist, die von einem normalen Verbrennungsmotor angetrieben wird,
b) einem, auf den Fahrer des Nutzer-Fahrzeugs gerichteten und bezogenen Kommunikations-Modul (1), wobei das Kommunikations-Modul (1) auf der Mobilstation (7) in Augenhöhe eines, im zu beladenden Fahrzeug sitzenden, Fahrers angebracht ist,
c) einer Bezahleinheit (8), wobei hier im einfachsten Fall auch mit Bargeld bezahlt werden kann,
d) einer Steuereinheit (13), und
e) einem Sensor (12), der den Roboterarm (2) mit dem Primärteil (3) des Ladeübertragers in die genaue Lage zu dem Sekundärteil (4) führt, wobei das Sekundärteil (4) die Funktion einer dreidimensionalen Lagemeldung erbringt, die mit den korrespondierenden Erfassungselementen des Sensors (12) harmoniert.

2. Vorrichtung nach Anspruch 1, **dadurch gekennzeichnet, dass** eine Horizontalverfahr-Einrichtung (9) an der Mobilstation (7) vorgesehen ist, die dem Roboterarm (2) eine Horizontal-Justierung des Primärteils (3) des Ladeübertragers an das dem Fahrzeug angebrachte Sekundärteil (4) des Ladeübertragers ermöglicht ohne die Mobilstation extra zu verfahren.

3. Vorrichtung nach Anspruch 1 oder 2,
**dadurch gekennzeichnet,**
**dass** die benötigte Energiezufuhr der Mobilstation (7) induktiv über im Boden verlegte elektrische Kabel, oder einer normalen elektrischen Leitung, oder mittels einer zu erbauenden Oberleitung, oder jeweils mittels einer speziell vorgeladenen Batterie erfolgt.

4. Vorrichtung nach einem der Ansprüche 1 bis 3,
**dadurch gekennzeichnet,**
**dass** das Kommunikations-Modul (1) der Mobilstation (7) funktechnisch mit einem Abrechnungszentrum verbunden ist.

5. Vorrichtung nach einem der vorhergehenden Ansprüche,
**dadurch gekennzeichnet,**
**dass** die Bezahleinheit (8) der Mobilstation (7) vor Ort bedienbar und/oder funktechnisch mit einem digitalen Zahlungssystem verbunden ist.

6. Vorrichtung nach einem der vorhergehenden Ansprüche,
**dadurch gekennzeichnet,**
**dass** die Steuereinheit (13) der Mobilstation (7) hinsichtlich der Verfahrbarkeit der Mobilstation (7) funktechnisch mit einem großräumigen Steuerungszentrum verbunden ist, oder mittels einer Handbedienung beeinflusst werden kann, oder ganz ausgeschaltet werden kann.

7. Vorrichtung nach Anspruch 1
**dadurch gekennzeichnet,**
**dass** die Mobilstation (7) mit einer zusätzlichen manuell zu betätigenden, die Fahreinrichtung (6) ausschließenden, Fahreinrichtung versehen ist.

8. Verfahren zum drahtlosen induktiven Übertragen elektrischer Energie auf ein Fahrzeug,
mit den folgenden Merkmalen:
a) eine mittels einer Fahreinrichtung (6) verfahrbare Mobilstation (7) weist einen automatisch gesteuerten Roboterarm (2) auf, der ein Primärteil (3) eines Ladeübertragers trägt, das an ein ihm entsprechendes Sekundärteil (4) am Fahrzeug angepasst ist und auf dieses induktiv elektrische Energie übertragen kann, wobei die Entriegelung (14) der automatischen Steuerung des Roboterarms (2) mittels einer Vorrichtung (16) und/oder der Fahreinrichtung (6) mittels einer Einrichtung (14) ermöglicht wird, wobei die Entriegelung (14) die manuelle Positionierung der Mobilstation (7) mittels eines Handgriffs (15) ermöglicht und die Entriegelung (16) ermöglicht, dass der Roboterarm (2) von seiner automatischen Steuerung abgekoppelt wird, um im Bedarfsfall das Primärteil (3) des Ladeübertragers per Hand mittels eines Handgriffs (17) zu einem Sekundärteil (4) am Fahrzeug zu führen, wobei beim Ausfall der Fahreinrichtung (6) der Mobilstation (7) zusätzlich eine an die Mobilstation (7) andockbare Verfahrmöglichkeit vorgesehen ist, die von einem normalen Verbrennungsmotor angetrieben wird,
b) die Mobilstation (7) weist ein auf den Fahrer gerichtete und bezogene Kommunikations-Modul auf, das den Abnehmern der elektrischen Energie die Bestellung, Bezahlung und Lieferung, bzw. Abnahme der elektrischen Energie ermöglicht, wobei die Kommunikation über ein Display und manuelle Bedienung oder über funktechnische Einrichtungen und digitale Bezahlsysteme erfolgt, oder Bargeldzahlsysteme erfolgt, wobei das Kommunikations-Modul (1) auf der Mobilstation (7) in Augenhöhe eines, im zu beladenden Fahrzeug sitzenden, Fahrers angebracht ist, und
c) ein Sensor (12) führt den Roboterarm (2) mit dem Primärteil (3) des Ladeübertragers in die genaue Lage zu dem Sekundärteil (4), wobei das Sekundärteil (4) die Funktion einer dreidimensionalen Lagemeldung erbringt, die mit den korrespondierenden Erfassungselementen des Sensors harmoniert, wobei sich vor Beginn des Ladevorgangs entsprechende elektronische Anlageteile in der Mobilstation (7) und im Fahrzeug sich darüber austauschen, ob und auf welche Weise ein Ladevorgang möglich ist.

9. Verfahren nach Anspruch 8,
**dadurch gekennzeichnet,**
**dass** die für die Mobilstation (7) notwendige Energiezufuhr induktiv über ein im Boden verlegtes Kabelsystem, oder einer normalen elektrischen Leitung, oder einer an die örtlichen Gegebenheiten angepasstes Oberleitungssystem, oder einer entsprechend dimensionierten Ladebatterie erfolgt, wobei im letzten Fall die jeweils benötigte Batterie zu einem früheren Zeitpunkt gewissermaßen auf Vorrat geladen wurde.

## Claims

1. Apparatus for the wireless inductive transmission of electrical energy to a vehicle,
having the following features:
a) a mobile station (7) which can move by means of a transportation device (6) and has an automatically controlled robot arm (2) and a primary part (3), positioned thereon, of a load transfer device, wherein the (14) of the automatic control of the robot arm (2) is possible by means of an apparatus (16) and/or the transportation device (6) by means of a device (14), wherein the enabling (14) makes possible the manual positioning of the mobile station (7) by means of a handle (15), and the enabling (16) permits the robot arm (2) to be uncoupled from its automatic controller, in order to move, when necessary, the primary part (3) of the load transfer device manually by means of a handle (17) to a secondary part (4) on the vehicle, wherein if the transportation device (6) of the mobile station (7) fails a transportation possibility which can be docked into the mobile station (7) is additionally provided, said transportation possibility being driven by a normal internal combustion engine,
b) a communication module (1) which is directed and referred to the driver of the user vehicle, wherein the communication module (1) is mounted on the mobile station (7) at eye level of a driver seated in the vehicle which is to be loaded,
c) payment unit (8), wherein in the simplest case it is also possible to pay with cash here,
d) a control unit (13), and
e) a sensor (12) which moves the robot arm (2) into the precise position with respect to the secondary part (4) with the primary part (3) of the load transfer device, wherein the secondary part (4) provides the function of a three-dimensional position signalling means which harmonizes with the corresponding sensing element of the sensor (12).

2. Apparatus according to Claim 1, **characterized in that** a horizontal movement device (9) is provided on the mobile station (7), which permits the robot arm (2) to carry out horizontal adjustment of the primary part (3) of the load transfer device to the secondary part (4), mounted on the vehicle, of the load transfer device, without specially moving the mobile station.

3. Apparatus according to Claim 1 or 2,
**characterized in that**
the required supply of energy to the mobile station (7) takes place inductively via electrical cables which are laid in the ground, or a normal electrical line, or by means of an overhead line which is to be installed, or in each case by means of a specifically pre-charged battery.

4. Apparatus according to one of Claims 1 to 3,
**characterized**
**in that** the communication module (1) of the mobile station (7) is connected by radio technology to a billing centre.

5. Apparatus according to one of the preceding claims,
**characterized**
**in that** the payment unit (8) of the mobile station (7) can be operated in situ and/or is connected by radio technology to a digital payment system.

6. Apparatus according to one of the preceding claims,
**characterized**
**in that**, with respect to the mobility of the mobile station (7), the control unit (13) of the mobile station (7) is connected by radio technology to a large-scale control centre, or can be influenced by means of manual operation, or can be entirely switched off.

7. Apparatus according to Claim 1,
**characterized**
**in that** the mobile station (7) is provided with an additional transportation device which can be activated manually and which switches off the transportation device (6).

8. Method for the wireless inductive transmission of electrical energy to a vehicle,
having the following features:
a) a mobile station (7) which can be moved by means of a transportation device (6) has an automatically controlled robot arm (2) which carries a primary part (3) of a load transfer device, which primary part (3) is adapted to a secondary part (4), corresponding to it, on the vehicle and can transmit electrical energy inductively thereto, wherein the enabling (14) of the automatic control of the robot arm (2) is made possible by means of an apparatus (16) and/or the transportation device (6) by means of a device (14), wherein the enabling (14) permits the manual positioning of the mobile station (7) by means of a handle (15), and the enabling (16) permits the robot arm (2) to be uncoupled from its automatic controller, in order when necessary to move the primary part (3) of the load transfer device manually to a secondary part (4) on the vehicle by means a handle (17), wherein when the transportation device (6) of the mobile station (7) fails, a transportation possibility which can be docked into the mobile station (7) and which is driven by a normal internal combustion engine is additionally provided,
b) the mobile station (7) has a communication module which is directed toward and referred to the driver and which permits the consumers of the electrical energy to order, pay for and supply or draw the electrical energy, wherein the communication occurs via a display and manual operation or via technical radio devices and digital payment systems or takes place via cash payment systems, wherein the communication module (1) is mounted on the mobile station (7) at eye level of a driver seated in the vehicle to be loaded, and
c) a sensor (12) moves the robot arm (2) with the primary part (3) of a transfer device into the precise position with respect to the secondary part (4), wherein the secondary part (4) provides the function of a three-dimensional position signalling means which cooperates with the corresponding sensing elements of the sensor, wherein before the start of the loading process corresponding electronic system components in the mobile station (7) and in the vehicle exchange information as to whether and in what way a loading process is possible.

9. Method according to Claim 8,
**characterized**
**in that** the energy supply which is necessary for the mobile station (7) occurs inductively via a cable system which is laid in the ground, or a normal electrical line or an overhead line system which is adapted to the local conditions, or a correspondingly dimensioned charging battery, wherein in the last case the respectively required battery has been charged, as it were in advance, at an earlier time.

## Revendications

1. Dispositif de transfert inductif sans fil d'énergie électrique à un véhicule, comportant les caractéristiques suivantes :
a) une station mobile (7) déplaçable au moyen d'un dispositif de déplacement (6), comportant un bras de robot (2) à commande automatique et une pièce primaire (3), positionnée au niveau de celui-ci, d'un transmetteur de charge, le (14) de la commande automatique du bras de robot (2) étant possible au moyen d'un dispositif (16) et/ou du dispositif de déplacement (6) au moyen d'un dispositif (14), le déverrouillage (14) permettant le positionnement manuel de la station mobile (7) au moyen d'une poignée (15) et le déverrouillage (16) permettant que le bras de robot (2) soit désaccouplé de sa commande automatique afin, en cas de besoin, de guider la pièce primaire (3) du transmetteur de charge à la main au moyen d'une poignée (17) vers une pièce secondaire (4) au niveau du véhicule, dans lequel, en cas de panne du dispositif de déplacement (6) de la station mobile (7), il est prévu en plus une possibilité de déplacement pouvant être arrimée à la station mobile (7) et qui est entraînée par un moteur à combustion normal,
b) un module de communication (1) orienté vers et en lien avec le conducteur du véhicule d'utilisateur, le module de communication (1) étant installé sur la station mobile (7) à hauteur des yeux d'un conducteur assis dans le véhicule à charger,
c) une unité de paiement (8), sachant qu'on peut ici dans le plus simple des cas également payer en espèces,
d) une unité de commande (13), et
e) un capteur (12) qui guide le bras de robot (2) avec la pièce primaire (3) du transmetteur de charge dans la position précise vers la pièce secondaire (4), la pièce secondaire (4) assurant la fonction d'un signalement de position tridimensionnel qui s'harmonise avec les éléments de détection correspondants du capteur (12).

2. Dispositif selon la revendication 1, **caractérisé en ce qu'**il est prévu au niveau de la station mobile (7) un dispositif de déplacement horizontal (9) qui permet au bras de robot (2) d'ajuster horizontalement la pièce primaire (3) du transmetteur de charge à la pièce secondaire (4), installée au niveau du véhicule, du transmetteur de charge sans avoir à déplacer la station mobile.

3. Dispositif selon la revendication 1 ou 2,
**caractérisé**
**en ce que** l'apport d'énergie nécessaire de la station mobile (7) a lieu de manière inductive par l'intermédiaire de câbles électriques posés dans le sol, ou d'une ligne électrique normale, ou au moyen d'une ligne aérienne à créer, ou respectivement au moyen d'une batterie spécialement préchargée.

4. Dispositif selon une des revendications 1 à 3,
**caractérisé**
**en ce que** le module de communication (1) de la station mobile (7) est raccordé par système radioélectrique à un centre de facturation.

5. Dispositif selon une des revendications précédentes,
**caractérisé**
**en ce que** l'unité de paiement (8) de la station mobile (7) est raccordée de manière à être utilisable sur place et/ou par système radioélectrique à un système de paiement numérique.

6. Dispositif selon une des revendications précédentes,
**caractérisé**
**en ce que** l'unité de commande (13) de la station mobile (7), en ce qui concerne la possibilité de déplacement de la station mobile (7), est raccordée par système radioélectrique à un centre de commande de grand volume, ou peut être influencée au moyen d'une manœuvre manuelle, ou être totalement éteinte.

7. Dispositif selon la revendication 1,
**caractérisé**
**en ce que** la station mobile (7) est pourvue d'un dispositif de déplacement supplémentaire s'actionnant à la main et excluant le dispositif de déplacement (6).

8. Procédé de transfert inductif sans fil d'énergie électrique à un véhicule,
comportant les caractéristiques suivantes :
a) une station mobile (7) déplaçable au moyen d'un dispositif de déplacement (6) présente un bras de robot (2) à commande automatique qui supporte une pièce primaire (3) d'un transmetteur de charge qui est adaptée à une pièce secondaire (4) lui correspondant au niveau du véhicule et peut transférer à celle-ci de manière inductive de l'énergie électrique, le déverrouillage (14) de la commande automatique du bras de robot (2) étant possible au moyen d'un dispositif (16) et/ou le déverrouillage du dispositif de déplacement (6) étant possible au moyen d'un dispositif (14), le déverrouillage (14) permettant le positionnement manuel de la station mobile (7) au moyen d'une poignée (15) et le déverrouillage (16) permettant que le bras de robot (2) soit désaccouplé de sa commande automatique afin, en cas de besoin, de guider la pièce primaire (3) du transmetteur de charge à la main au moyen d'une poignée (17) vers une pièce secondaire (4) au niveau du véhicule, dans lequel, en cas de panne du dispositif de déplacement (6) de la station mobile (7), il est prévu en plus une possibilité de déplacement pouvant être arrimée à la station mobile (7) et qui est entraînée par un moteur à combustion normal,
b) la station mobile (7) présente un module de communication orienté vers et en lien avec le conducteur et qui permet aux consommateurs de l'énergie électrique de commander, payer et livrer ou prélever l'énergie électrique, la communication ayant lieu par un afficheur et une manœuvre manuelle ou des dispositifs radioélectriques et des systèmes de paiement numériques, ou des systèmes de paiement en espèces, le module de communication (1) étant installé sur la station mobile (7) à hauteur des yeux d'un conducteur assis dans le véhicule à charger,
c) un capteur (12) guide le bras de robot (2) avec la pièce primaire (3) du transmetteur de charge dans la position précise vers la pièce secondaire (4), la pièce secondaire (4) assurant la fonction d'un signalement de position tridimensionnel qui s'harmonise avec les éléments de détection correspondants du capteur, des pièces électroniques de l'installation se correspondant avant le début du processus de charge dans la station mobile (7) et dans le véhicule échangeant entre elles pour savoir si et de quelle manière un processus de charge est possible.

9. Procédé selon la revendication 8,
**caractérisé**
**en ce que** l'apport d'énergie nécessaire pour la station mobile (7) a lieu de manière inductive par l'intermédiaire d'un système de câbles posé dans le sol, ou d'une ligne électrique normale, ou d'un système de ligne aérienne adapté aux données locales, ou d'une batterie rechargeable dimensionnée en conséquence, sachant que, dans ce dernier cas, la batterie respectivement nécessaire a été dans une certaine mesure chargée jusqu'à la réserve à un moment antérieur.
